# EUROPEAN PATENT SPECIFICATION

(11) **EP 2 882 256 B1**
(45) Date of publication and mention of the grant of the patent: **13.03.2019**
(21) Application number: 13306685.2
(22) Date of filing: 09.12.2013
(51) Int. Cl.: H04W 88/08

(54) **Radio access unit with analogue carrier recovery**
Funkzugriffseinheit mit analoger Trägerrückgewinnung
Unité d'accès radio avec récupération de porteuse analogique

(43) Date of publication of application: 10.06.2015
(73) Proprietor: Alcatel Lucent, 91620 Nozay (FR)
(72) Inventor: Maier, Simone, 70435 Stuttgart (DE)
(74) Representative: Browne, Robin Forsythe

(56) References cited:
- EP-A1- 2 228 920
- US-A1- 2011 302 390
- US-B1- 6 501 942

## Description

### FIELD OF THE INVENTION

The present invention relates to a radio access unit for wireless communication and a method for operating the same.

### BACKGROUND OF THE INVENTION

This section introduces aspects that may be helpful in facilitating a better understanding of the invention. Accordingly, the statements of this section are to be read in this light and are not to be understood as admission about what is in the prior art.

Future mobile communication systems will rely on a heterogeneous architecture. To simplify the network planning, the deployment of small cells should be dictated by RF considerations and capacity needs only, and not by access and availability of power and backhaul links. Therefore, a completely autonomous cube with locally integrated renewable energy source utilizing a wireless backhaul link is envisaged. State-of-the-art base station concepts for small cells are composed of two completely separate units. The first unit generates/receives the signals exchanged between the base station and the user terminals. The second unit receives/generates the signals exchanged on the wireless backhaul link between the base station and the core network. The two units are connected via a base band interface using an Ethernet link or the like. Both units not only have significant power consumption because of the complex architecture and contain a lot of functionality but also suffer from a high component count and related cost and size. One possible frequency band supporting this architecture is the unlicensed 60 GHz band or the 75/85 GHz bands. At these frequencies and in general also at other frequencies the required signal source or sources for generating the local oscillator signal, both for the up and down conversion in the small cell base station, is a challenging component. A good phase noise performance and a high output power are needed to ensure sufficient system linearity. This leads to high power consumption, big sizes, and expensive components. Furthermore, a GPS receiver is needed to generate the required stable and synchronous reference signal.

US-patent 6,501,942 describes a repeater apparatus for conveying a radio-frequency (RF) signal into an environment closed-off to the RF-signal. The repeater apparatus includes a master transceiver and one or more slave transceiver units. The apparatus further includes one or more cables coupled between the master transceiver unit and the one or more slave transceiver units. The master transceiver receives the RF-signal and generates an intermediate-frequency (IF) signal responsive to the RF-signal and a local oscillator (LO) signal generated in the master transceiver unit. The master transceiver unit transmits the IF-signal and a divided LO-signal to the one or more slave transceiver units. At the one or more slave transceiver units the RF signal is recovered.

EP-patent application 2228920 describes a method for synchronizing RF-antenna signals of a plurality of RF antenna sites at different locations of a radio transmission system. A reference signal generated at a central unit is transmitted as an optical signal to the RF antenna sites via a plurality of optical fiber links, and used for synchronizing the RF antenna signals of the different RF antenna sites.

### SUMMARY OF THE INVENTION

It is an object of the invention to propose a cheap small cell base station (radio access unit) with low power consumption and small size.

According to one embodiment of the invention, a method for wireless communication in a communication network is proposed. The communication network comprises at least one central unit and at least one radio access unit. User terminals are connected on a wireless link to the radio access unit. The radio access unit comprises an injection locked oscillator and an upconversion mixer. The radio access unit receives a first signal transmitted by the central unit on a communication link between the central unit and the radio access unit. The received first signal comprises a data part and an oscillator part. The data part of the received first signal is e.g. a data signal which was upconverted by the transmitter
to the frequency of the wireless communication link. The oscillator part of the received first signal is e.g. a signal generated by the oscillator of the transmitter. It corresponds to the signal which was used for upconverting the data signal in the transmitter. The data part and the oscillator part of the received first signal are decoupled in the radio access unit. The decoupled oscillator part of the received first signal is applied to the injection locked oscillator, which generates an oscillator signal. The oscillator signal generated by the injection locked oscillator is provided as an input to the upconversion mixer. A data signal to be transmitted is upconverted with the upconversion mixer in the radio access unit with the generated oscillator signal. This has the advantage that no signal source, e.g. no oscillator is needed in the radio access unit for upconverting a signal to be transmitted from the radio access unit to the central unit. The radio access unit, which is e.g. a small cell base station, relies on energy efficiency. In some cases the radio access unit has an independent energy source with limited power, e.g. a battery or solar module. It is thus advantageous to reduce the power consuming components like an oscillator, e.g. a phase locked loop oscillator for a high backhaul frequency. On the other hand, the central unit e.g. a macro cell base station is usually sufficiently supplied with energy and power consuming devices are acceptable. The radio access unit does not require a local oscillator for generating oscillator signals in the radio access unit, but instead uses the signals transmitted from the central unit on the wireless backhaul link. Therefore the radio access unit does not need a GPS receiver and high performance signal sources for generating the local oscillator signals. This will lead to a drastic reduction in power consumption, size, weight and cost of the radio access unit. Therefore, a completely autonomous wireless radio access unit with integrated renewable energy sources is enabled. A completely autonomous wireless radio access unit has in general the benefits of an easier and cheaper deployment since no installation of cables or fibers is needed.

The injection locked oscillator is much easier to realize and consumes less power than an oscillator generating the oscillating signal independently. The phase noise of the injection locked oscillator is as good as the phase noise of the signal provided at the input of the injection locked oscillator. Thus, as in the central unit a high quality oscillator signal is generated with a complex oscillator device having low phase noise, this signal can be regenerated in the radio access unit with a simple device like an injection locked oscillator from the oscillator part of the received first signal.

According to one embodiment, the received first signal is applied to a duplexer for decoupling the data part and the oscillator part of the received signal. According to one embodiment, a splitter or directional coupler and filters are used for realizing the functionality of the duplexer.

According to one embodiment, a radio access unit for wireless communication in a communication network is proposed. The wireless communication network comprises radio access unit for wireless connection of user terminals and at least one central unit. The radio access unit comprises a receiver for receiving a first signal from the central unit. The received first signal comprises a data part and an oscillator part. The radio access unit further comprises a decoupler for decoupling the data part and the oscillator part of the received first signal. The radio access unit further comprises an injection locked oscillator for generating an oscillator signal. Further, the radio access unit comprises an upconversion mixer for upconverting a data signal to be transmitted on a communication link from the radio access unit to the central unit. The upconversion mixer has an oscillator input for applying the oscillator signal generated by the injection locked oscillator. The injection locked oscillator has an output being connected to the oscillator input of the upconverter. This has the advantage that the radio access unit does not need any independent local oscillator which is power consuming and has a big size.

The injection locked oscillator is much easier to realize and consumes less power than an oscillator generating independently the oscillating signal. The phase noise of the injection locked oscillator is as good as the phase noise of the signal provided at the input of the injection locked oscillator. Thus, as in the central unit a high quality oscillator signal is generated with a complex oscillator device, having low phase noise, this signal can be regenerated in the radio access unit with a simple devices like an injection locked oscillator from the oscillator part of the received first signal.

According to one embodiment, the decoupler for decoupling the oscillator part and the data part of the received first signal takes the form of a duplexer.

According to one embodiment, a communication network for wireless communication comprising at least one central unit and at least one radio access unit as described above is proposed.

Further advantageous features of the embodiments of the invention are defined and are described in the following detailed description.

### BRIEF DESCRIPTION OF THE DRAWINGS

Some embodiments of apparatus and methods in accordance with embodiments of the present invention are now described, by way of examples only, and with reference to the accompanying drawings, in which:
- Fig. 1: shows a wireless communication network
- Fig. 2: shows a radio access unit in a wireless communication network
- Fig. 3: shows a central unit in a wireless communication network
- Fig. 4: shows a radio access unit in a wireless communication network according to a first embodiment
- Fig. 5: shows a radio access unit in a wireless communication network according to a second embodiment
- Fig. 6: shows a central unit in a wireless communication network according to one embodiment

### DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

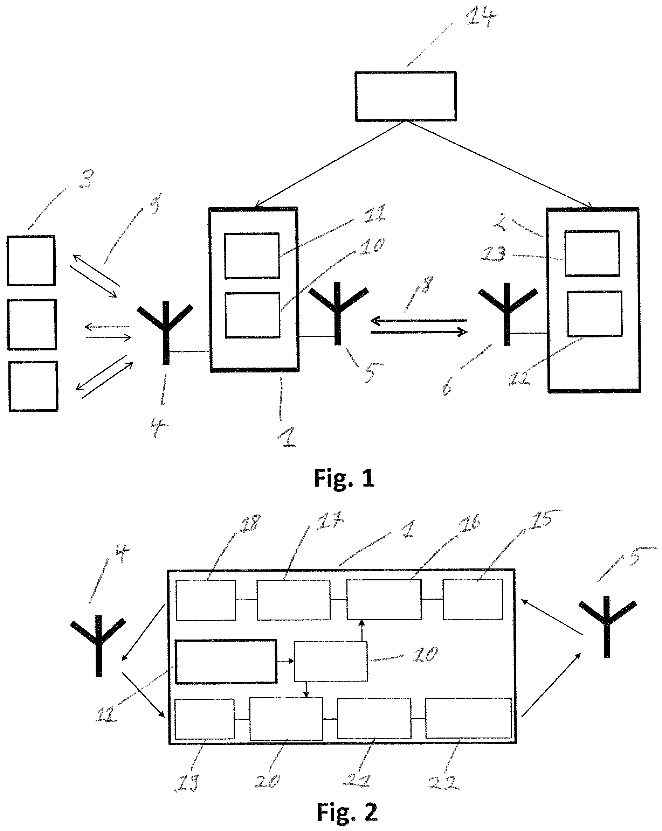

Fig. 1 discloses a central unit 2 and a radio access unit 1 as known in the art. The radio access unit 1 generates its local oscillator signals with a local oscillator 10 based on a reference signal provided by a GPS receiver 11. Also the central unit generates a local oscillator signal with a local oscillator 12 base on a reference signal provided by a GPS receiver 13. The local oscillator signal of the central unit 2 and the local oscillator signal of the radio access unit 1 are generated with different local oscillators 10, 12. The GPS reference signal is provided by GPS satellites 14. The radio access unit 1 and the central unit 2 communicated via backhaul antennas 5, 6 on a high frequency backhaul link 8, e.g. a 60 GHz or 75/85 GHz backhaul link. The radio access unit 1 provides a low frequency antenna 4 for connecting user terminals 3, e.g. on a 2.6 GHZ link 9 via UMTS or LTE or the like.

Fig. 2 shows a radio access unit 1 as known in the art in more detail. An exemplary scenario for a wireless 60 GHz backhaul link is shown. The radio access unit 1 includes a backhaul antenna 5 for receiving an input signal which is transmitted by the central unit. The input signal is provided to a 60 GHz filter 15 and then to a downconversion mixer 16 for downconverting the received signal. The local oscillator input of the mixer 16 is fed by a local oscillator 10 which generates a local oscillator signal based on a signal received by a GPS receiver 11. Using the GPS signal as reference signal, a local oscillator signal at the desired frequency has a low phase noise and high frequency stability can be achieved. The downconverted signal is then amplified by a power amplifier 17 and filtered by a low frequency filter 18, e.g. a 2.6 GHz filter or a filter adapted to LTE or UMTS frequencies. The signal is then provided to a low frequency antenna 4 and transmitted to the user terminals. On the uplink, a signal is received from the user terminals at the low frequency antenna 4 and provided to a low frequency filter 19 and then to the input of an upconversion mixer 20. The local oscillator input signal of the upconversion mixer 20 is provided by the same local oscillator 10 as described above or a separate local oscillator is used for upconversion. The upconverted 59.9 GHz signal is amplified by a power amplifier 21 and filtered by a high frequency filter 22 and then provided to the wireless backhaul link via the high frequency antenna 5. Power amplifier 21 and high frequency filter 22 may also be interchanged. Further low noise amplifiers or further filters may be included in the signal paths but are not depicted for sake of simplicity. Also if only one high frequency antenna 5 and only one low frequency antenna 4 is depicted, there might be separate high frequency antennas 5 and separate low frequency antennas 4 for transmitting and receiving, respectively.

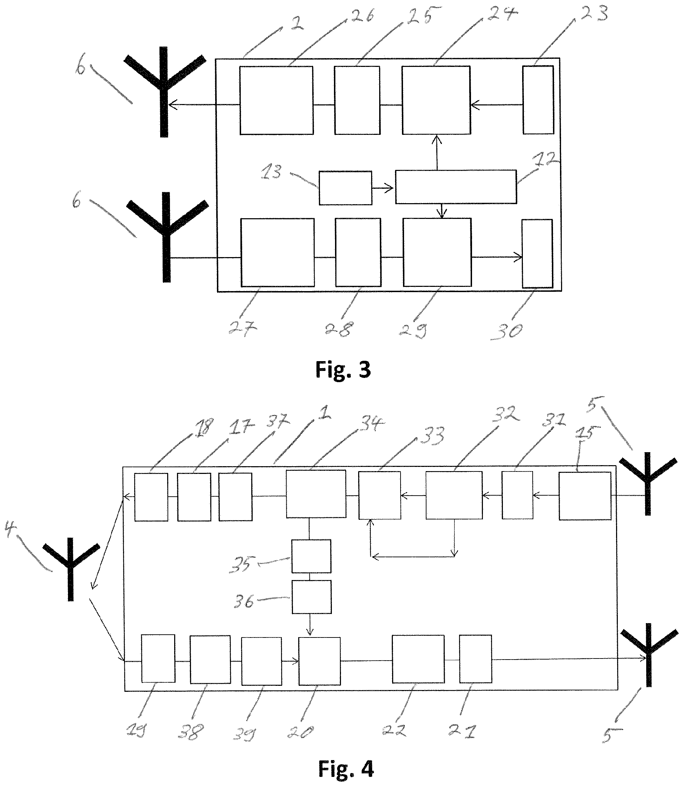

Fig. 3 shows a central unit 2 according to one embodiment of the invention. The central unit 2 comprises a base band processing and IF signal generation unit 23 in downlink direction, before the data signal is upconverted to the backhaul frequency by an upconversion mixer 24. A local oscillator 12 which generates a local oscillator signal based on a signal received by a GPS receiver 13 is provided. The upconverted signal is amplified by a power amplifier 25 and filtered by an image filter 26 and then provided to a high frequency antenna 6 for transmission. The image filter 26 filters out the image frequency which was generated during upconversion. The local oscillator signal, which is available in the output signal of the upconversion mixer 24 is not filtered out. This local oscillator part is also transmitted via the high frequency antenna 6. In the uplink direction, the central unit 2 receives the wireless communication signal transmitted by the radio access unit 1 via the antenna 6. The received signal is filtered by a filter 27 and amplified by a low noise amplifier 28 and then provided to the radio frequency input of a downconversion mixer 29. The donwconversion mixer 29 receives a local oscillator signal from the local oscillator 12. The donwconverted output signal of the mixer 29 is then provided to an IF signal and base band processing unit 30. In one embodiment, two separate local oscillators (not depicted) are used for generating the local oscillator signal for the upconversion mixer 24 and the downconversion mixer 29. This is advantageous if slightly different frequencies are used for the downlink and uplink connection. According to one embodiment, a passive mixer 24 is used for generating the high frequency signal. The output signal of the mixer 24 comprises a data part, e.g. at 62.6 GHz, an oscillator part, e.g. at 60GHz, which is the local oscillator signal that is provided at the output port of the mixer 24 due to LO-RF feed trough and an image signal, e.g. at 57.4 GHz.

These signals are amplified by the power amplifier 25 to achieve the transmit power level. The image signal is filtered out by the image filter 26 before transmitting the signal. In one embodiment, the oscillator part of the signal to be transmitted is attenuated to a lower power level than the data part of the signal, but the oscillator part is not filtered out completely. In one embodiment, the output signal of the mixer 24 is first applied to the image filter 26 and then to the power amplifier 25.

Fig. 4 depicts a radio access unit 1 according to one embodiment of the invention. The embodiment follows a self-heterodyning mixer approach. An exemplary scenario for a wireless 60 GHz backhaul link is shown. Reference signs of units corresponding to the ones depicted in Fig. 2 are the same as in Fig. 2. The radio access unit 1 includes a backhaul antenna 5 for receiving an input signal which is transmitted by the central unit. The input signal, which is the output signal of the central unit that is transmitted on the wireless communication link comprises a data part and an oscillator part as described above. The input signal is provided to a high frequency filter 15 and to a low noise amplifier 31. A splitter 32 is provided which splits the input signal into two parts. The output signals of the splitter 32 are applied to the oscillator input and RF input of a mixer 33. In one embodiment, the mixer 33 is a mixer with high LO-IF leakage, e.g. a passive mixer, and thus at the output of the mixer 33 both the input signals, i.e. oscillator part and data part, together with the IF signal are available. A duplex filter or coupler 34 and filters 35, 37 are used to separate the IF signal from the oscillator signal. The IF signal is provided to a power amplifier 17 and a filter 18 and then transmitted via the low frequency antenna 4 to the user terminals. In one embodiment, the power amplifier 17 is a variable gain amplifier.

The oscillator signal decoupled by the coupler 34 is provided to an amplifier 36 and is used as oscillator input for an upconversion mixer 20 in the uplink path.

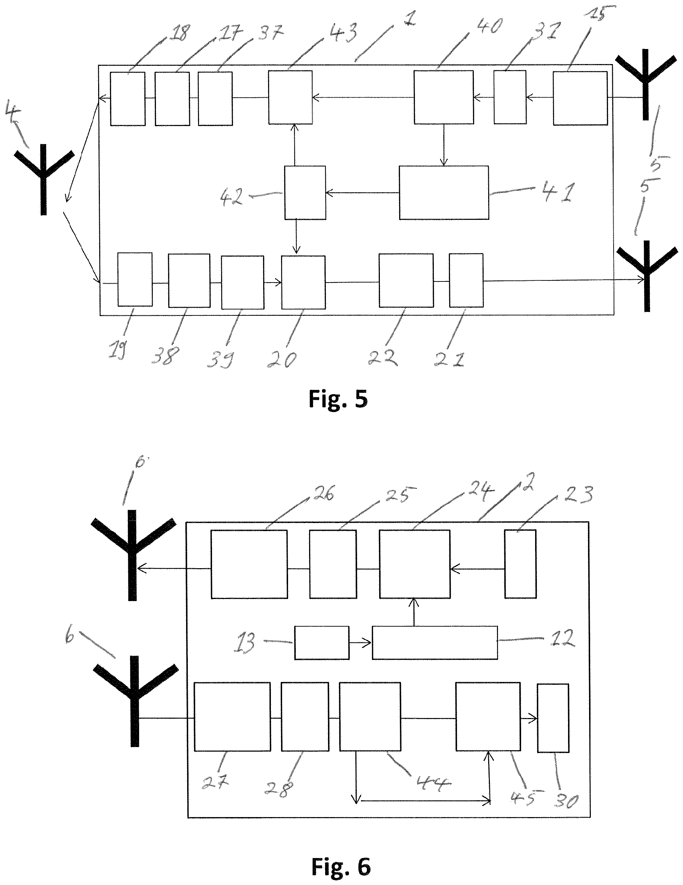

In the uplink path, a signal transmitted by the user terminal is received at the low frequency antenna and provided to a filter 19. A low noise amplifier 38, e.g. a variable gain amplifier, amplifies the received signal and provides it to an input of an upconversion mixer 20. In one embodiment, a filter 39 is provided before the mixer input. The oscillator signal derived from the input signal received from the central unit as described above is provided to the oscillator input of the upconversion mixer 20. This way, the input signal received from the user terminal is upconverted to the backhaul frequency in the radio access unit 1 without the need to provide a local oscillator in the radio access unit 1. The high frequency output signal of the upconversion mixer 20 is filtered by a high frequency filter 22 and amplified by a power amplifier 21 and provided to a high frequency antenna 5. Power amplifier 21 and high frequency filter 22 may also be interchanged. In one embodiment, the high frequency antenna 5 in the receive path and in the transmit path is be the same high frequency antenna 5. In one embodiment, separate low frequency antennas 4 are provided for the transmit path and for the receive path. If the receiver in the central unit also uses the self-heterodyning concept, then the filter 22 in the transmit path of the radio access unit 1 lets the oscillator signal pass to the high frequency antenna 5 and only filters out the image signal. One embodiment of a corresponding receiver of the central unit is depicted in Fig. 6 and the corresponding description. If the receiver in the central unit is a conventional receiver as depicted in Fig. 3 and the corresponding description, then the filter 22 in the transmit path of the radio access unit 1 filters out the image signal and the oscillator signal.

Fig. 5 depicts a radio access unit 1 according to one embodiment of the invention. The embodiment uses an injection locked oscillator for regenerating the carrier signal received from the central unit. An exemplary scenario for a wireless 60 GHz backhaul link is shown. Reference signs of units corresponding to the ones depicted in Fig. 4 are the same as in Fig. 4. The radio access unit 1 includes a backhaul antenna 5 for receiving an input signal which is transmitted by the central unit. The input signal, which is the output signal of the central unit that is transmitted on the wireless communication link, comprises a data part and an oscillator part as described above. The input signal is provided to a high frequency filter 15 and to a low noise amplifier 31. A duplexer 40 is provided which receives the input signal and separates the oscillator part and the data part of the signal received from the central unit. The data part is provided to the RF input of a downconversion mixer 43 by the duplexer 40. The oscillator part is provided to the input of an injection locked oscillator 41 by the duplexer 40. The injection locked oscillator 41 generates an oscillator signal from the oscillator part of the signal received from the central unit. The injection locked oscillator 41 generates an oscillator signal at the same frequency as its input signal and in dependence of the phase noise of its input signal. As the central unit is a high quality device with a good oscillator signal source, because it does not have the power and size constraints of the radio access unit 1, the oscillator part of the received signal from the central unit has a good phase noise. Thus, the oscillator signal generated by the injection locked oscillator 41 has a good phase noise. On the other hand, the injection locked oscillator 41 is simpler to realize and has lower power consumption than an independent oscillator realized in the radio access unit 1. The output of the injection locked oscillator 41 is provided to the oscillator input of the downconversion mixer 43 in the downconversion path and the upconversion mixer 20 in the upconversion path. In one embodiment, the output signal of the injection locked oscillator 41 is amplified by an amplifier 42 before being provided to the input of the mixers 43, 20. In one embodiment, the output signal of the injection locked oscillator or the data part of the received signal are corrected in phase with a phase shifter in order to compensate phase differences introduced by the duplexer 40 and amplifier 42. Thus, if the phase relationship of the oscillator part and the data part of the received signal is high at the input of the downconversion mixer 43 in the radio access unit 1, phase noise is cancelled out. As a consequence, good signal quality is achieved even if the local oscillator signal generated in the central unit has not a very low phase noise. In the downlink path, the output of the downconversion mixer 43 is provided to a power amplifier 17 and a filter 18 and then transmitted via the low frequency antenna 4 to the user terminals. In one embodiment, the power amplifier 17 is a variable gain amplifier. In one embodiment, a filter 37 is provided at the output of the downconversion mixer 43. In the uplink path, a signal transmitted by the user terminal is received at the low frequency antenna 4 and provided to a filter 19. A low noise amplifier 38, e.g. a variable gain amplifier, amplifies the received signal and provides it to an input of the upconversion mixer 20. In one embodiment, a filter 39 is provided before the mixer input. The oscillator signal for the upconversion mixer 20 is generated by the injection locked oscillator 41 as described above. This way, the input signal received from the user terminal is upconverted to the backhaul frequency in the radio access unit 1 without the need of a local oscillator in the radio access unit 1. The high frequency output signal of the upconversion mixer 20 is filtered by filter 22 and amplified by a power amplifier 21 and provided to a high frequency antenna 5. Power amplifier 21 and high frequency filter 22 may also be interchanged. In one embodiment, the high frequency antenna 5 in the receive path and in the transmit path is the same high frequency antenna 5. In one embodiment, separate low frequency antennas 4 are provided for the transmit path and for the receive path. If the receiver in the central unit also uses the self-heterodyning concept, then the filter 22 in the transmit path of the radio access unit 1 lets the oscillator signal pass to the high frequency antenna 5 and only filters the image signal. One embodiment of a corresponding receiver in the central unit is depicted in Fig. 6 and the corresponding description. If the receiver in the central unit is a conventional receiver as depicted in Fig. 3 and the corresponding description, then the filter 22 in the transmit path of the in the radio access unit 1 filters the image signal and the oscillator signal.

Fig. 6 depicts central unit 2 according to one embodiment of the invention. The central unit 2 comprises a base band processing and IF signal generation unit 23 in downlink direction, before the data signal is upconverted to the backhaul frequency with an upconversion mixer 24. A local oscillator 12 which generates a local oscillator signal based on a signal received by a GPS receiver 13 is provided. The upconverted signal is amplified by a power amplifier 25 and filtered by an image filter 26 and then provided to a high frequency antenna 6 for transmission. In one embodiment, power amplifier 25 and image filter 26 are interchanged. The image filter 26 filters out the image frequency which was generated during upconversion. The local oscillator signal, which is available in the output signal of the upconversion mixer 24 is not filtered out. This local oscillator part is also transmitted via the high frequency antenna 6. In the uplink direction, the central unit 2 receives the wireless communication signal transmitted by the radio access unit 1 via the antenna 6. The wireless communication signal received has a data part and an oscillator part. The received signal is filtered by a filter 27 and amplified by a low noise amplifier 28 and then provided to a splitter 44. The splitter generates two signals including a data part and an oscillator part in correspondence to the received signal. A downconversion mixer 45 receives these signals at its high frequency input and at its local oscillator input. In one embodiment, the signals provided to the inputs of the downconversion mixer 45 are corrected in phase with a phase shifter in order to compensate phase differences introduced by the splitter 44 and filters. Thus, if the phase relationship of the signals applied to the RF input and the oscillator input of the downconversion mixer 45 is high, phase noise is cancelled out. As a consequence, good signal quality is achieved even if the local oscillator signal used for transmission has not a very low phase noise. The downconverted output signal of the mixer 45 is then provided to an IF signal and base band processing unit 30. Thus, the central unit 2 uses also a self-heterodyning concept in the receive path.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method for wireless communication in a communication network comprising at least one central unit (2) and at least one radio access unit (1) for wireless connection of user terminals (3), the radio access unit (1) comprising an injection locked oscillator (41) and an upconversion mixer (20) the method comprises the steps of:
- receiving by the radio access unit (1) a first signal transmitted by the central unit (2) on a communication link between the central unit (2) and the radio access unit (1), the received first signal comprising a data part and an oscillator part;
- decoupling the data part and the oscillator part of the received first signal;
- applying the decoupled oscillator part of the received first signal to the injection locked oscillator (41);
- generating an oscillator signal by the injection locked oscillator (41),
- providing the generated oscillator signal as an input to the upconversion mixer (20); and
- upconverting a data signal to be transmitted with the upconversion mixer with the generated oscillator signal.

2. Method for wireless communication according to claim 1, wherein the step of decoupling the data part and the oscillator part of the received first signal further comprises applying the received first signal to a duplexer (40) for decoupling the data part and the oscillator part.

3. Method for wireless communication according to claim 1 or 2, wherein the radio access unit further comprises an amplifier (42), the method further comprising amplifying the generated oscillator signal before providing the generated oscillator signal to the upconversion mixer (20).

4. Radio access unit for wireless communication in a communication network comprising the radio access unit (1) for wireless connection of user terminals and at least one central unit (2), the radio access unit comprising:
- a receiver for receiving a first signal from the central unit, the received first signal comprising a data part and a oscillator part;
- a decoupler for decoupling the data part and the oscillator part of the received first signal;
- an injection locked oscillator (41) for generating an oscillator signal; and
- an upconversion mixer (20) for upconverting a data signal to be transmitted on a communication link from the radio access unit to the central unit, by using the oscillator signal generated by the injection locked oscillator (41).

5. Radio access unit for wireless communication according to claim 4, wherein the decoupler takes the form of a duplexer (40).

6. Radio access unit for wireless communication according to claim 4 or 5, further comprising an amplifier (42) for amplifying the generated oscillator signal before the generated oscillator signal is provided as an input to the upconversion mixer (20).

7. Communication network for wireless communication comprising at least one central unit and at least one radio access unit according to one of claims 4 to 6.

## Patentansprüche

1. Verfahren zur drahtlosen Kommunikation in einem Kommunikationsnetzwerk mit mindestens einer Zentraleinheit (2) und mindestens einer Funkzugangseinheit (1) zur drahtlosen Verbindung von Benutzerendgeräten (3), wobei die Funkzugangseinheit (1) einen Injection-Locked-Oszillator (41) und einen Aufwärtsmischer (20) umfasst, wobei das Verfahren die Schritte umfasst:
- Empfangen durch die Funkzugangseinheit (1) eines ersten Signals, das von der Zentraleinheit (2) über eine Kommunikationsverbindung zwischen der Zentraleinheit (2) und der Funkzugangseinheit (1) gesendet wird, wobei das empfangene erste Signal einen Daten- und einen Oszillatorteil umfasst;
- Entkoppeln des Datenteils und des Oszillatorteils des empfangenen ersten Signals;
- Überführen des entkoppelten Oszillatorteils des empfangenen ersten Signals an den Injektion-Locked-Oszillator (41);
- Erzeugen eines Oszillatorsignals durch den Injektion-Locked-Oszillator (41), -
- Zuführen des erzeugten Oszillatorsignals als Input an den Aufwärtsmischer (20); und
- Aufwärtskonvertieren eines zu sendenden Datensignals unter Verwendung des Aufwärtsmischers mit dem erzeugten Oszillatorsignal.

2. Verfahren zur drahtlosen Kommunikation nach Anspruch 1, wobei der Schritt des Entkoppelns des Datenteils und des Oszillatorteils des empfangenen ersten Signals ferner, zum Entkoppeln des Datenteils und des Oszillatorteils, das Zuführen des empfangenen ersten Signals an einen Duplexer (40) umfasst.

3. Verfahren zur drahtlosen Kommunikation nach Anspruch 1 oder 2, wobei die Funkzugangseinheit ferner einen Verstärker (42) umfasst, wobei das Verfahren ferner das Verstärken des erzeugten Oszillatorsignals, vorgängig dem Zuführen des erzeugten Oszillatorsignals an den Aufwärtsmischer (20), umfasst.

4. Funkzugangseinheit zur drahtlosen Kommunikation in einem Kommunikationsnetzwerk umfassend die Funkzugangseinheit (1) zur drahtlosen Verbindung von Benutzerendgeräten und mindestens eine Zentraleinheit (2), wobei die Funkzugangseinheit umfasst:
- einen Empfänger zum Empfangen eines ersten Signals von der Zentraleinheit, wobei das empfangene erste Signal einen Datenteil und einen Oszillatorteil umfasst;
- einen Entkoppler zum Entkoppeln des Datenteils und des Oszillatorteils des empfangenen ersten Signals; und
- einen Aufwärtsmischer (20) zum Aufwärtsmischen eines, über eine Kommunikationsverbindung von der Funkzugriffseinheit zur Zentraleinheit, zu übertragenden Datensignals, unter Verwendung des, vom Injection-Locked-Oszillators (41) erzeugten, Oszillatorsignals.

5. Funkzugangseinheit zur drahtlosen Kommunikation nach Anspruch 4, wobei der Entkoppler die Funktion eines Duplexers (40) annimmt.

6. Funkzugangseinheit zur drahtlosen Kommunikation nach Anspruch 4 oder 5, ferner umfassend einen Verstärker (42) zum Verstärken des erzeugten Oszillatorsignals, bevor das erzeugte Oszillatorsignal dem Aufwärtsmischer (20) als Input zugeführt wird.

7. Kommunikationsnetzwerk für drahtlose Kommunikation mit mindestens einer Zentraleinheit und mindestens einer Funkzugangseinheit gemäss einem der Ansprüche 4 bis 6.

## Revendications

1. Procédé de communication sans fil dans un réseau de communication comprenant au moins une unité centrale (2) et au moins une unité d'accès radio (1) permettant une connexion sans fil de terminaux utilisateurs, l'unité d'accès radio (1) comprenant un oscillateur (41) verrouillé contre l'injection et un mélangeur de conversion-élévation (20), le procédé comprenant les étapes de :
réception par l'unité d'accès radio (1) d'un premier signal transmis par l'unité centrale (2) via une liaison de communication entre l'unité centrale (2) et l'unité d'accès radio (1), le premier signal reçu comprenant une partie données et une partie oscillatrice ;
découplage de la partie données et de la partie oscillatrice du premier signal reçu ;
application de la partie oscillatrice découplée du premier signal reçu à l'oscillateur verrouillé contre l'injection (41) ;
génération d'un signal d'oscillateur par l'oscillateur verrouillé contre l'injection (41) ;
fourniture du signal d'oscillateur généré en tant qu'entrée au mélangeur de conversion-élévation (20) ; et
conversion-élévation, par le biais du signal d'oscillateur généré, d'un signal de données devant être transmis avec le mélangeur de conversion-élévation.

2. Procédé de communication sans fil selon la revendication 1, selon lequel l'étape de découplage de la partie données et de la partie oscillatrice du premier signal reçu comprend en outre l'application du premier signal reçu à un duplexeur (40) pour découpler la partie données de la partie oscillatrice.

3. Procédé de communication sans fil selon la revendication 1 ou la revendication 2, selon lequel l'unité d'accès radio comprend en outre un amplificateur (42), le procédé comprenant en outre l'amplification du signal oscillateur généré avant de fournir le signal oscillateur généré au mélangeur de conversion-élévation.

4. Unité d'accès radio pour des communications sans fil dans un réseau de communication comprenant l'unité d'accès radio (1) pour une connexion sans fil de terminaux utilisateurs et au moins une unité centrale (2), l'unité d'accès radio comprenant :
un récepteur pour la réception d'un premier signal en provenance de l'unité centrale, le premier signal reçu comprenant une partie données et une partie oscillatrice ;
un découpleur pour le découplage de la partie données de la partie oscillatrice du premier signal reçu ;
un oscillateur verrouillé contre l'injection (41) pour la génération d'un signal oscillateur ; et
un mélangeur de conversion-élévation (20) pour convertir en élévation un signal de données devant être transmis via une liaison de communication depuis l'unité d'accès radio vers l'unité centrale, par le biais du signal oscillateur généré par l'oscillateur verrouillé contre l'injection (41).

5. Unité d'accès radio pour des communications sans fil selon la revendication 4, selon lequel le découpleur se présente sous la forme d'un duplexeur (40).

6. Unité d'accès radio pour des communications sans fil selon la revendication 4 ou la revendication 5, comprenant en outre un amplificateur (42) pour l'amplification du signal oscillateur généré avant de fournir le signal oscillateur généré en tant qu'entrée pour le mélangeur de conversion-élévation.

7. Réseau de communication pour la communication sans fil, comprenant au moins une unité centrale et au moins une unité d'accès radio selon l'une quelconque des revendications 4 à 6.
